# EUROPÄISCHE PATENTSCHRIFT

(11) **EP 2 651 079 B1**
(45) Veröffentlichungstag und Bekanntmachung des Hinweises auf die Patenterteilung: **05.10.2016**
(21) Anmeldenummer: 12188811.9
(22) Anmeldetag: 17.10.2012
(51) Int. Cl.: H04L 12/40

(54) **ELEKTRISCHE INSTALLATIONSANORDNUNG**
ELECTRICAL INSTALLATION ARRANGEMENT
AGENCEMENT D'INSTALLATION ÉLECTRIQUE

(30) Priorität: 16.02.2012 DE 102012101229
(43) Veröffentlichungstag der Anmeldung: 16.10.2013
(73) Patentinhaber: Insta Elektro GmbH, 58509 Lüdenscheid (DE)
(72) Erfinder: Schigelski, Gordian, 58509 Lüdenscheid (DE); Stecura, Darius, 45731 Waltrop (DE); Rosemann, Peter, 58091 Hagen (DE); Rüther, Carsten, 59425 Unna (DE); Becker-Hennecke, Ralph, 58239 Schwerte (DE); Scharbatke, Kai, 58515 Lüdenscheid (DE)

(56) Entgegenhaltungen:
- EP-A1- 1 657 888
- EP-A2- 0 854 610
- US-A- 4 245 344
- WAYNE D GROVER: "High Availability Path Design in Ring-Based Optical Networks", IEEE / ACM TRANSACTIONS ON NETWORKING, IEEE / ACM, NEW YORK, NY, US, Bd. 7, Nr. 4, 1. August 1999 (1999-08-01), XP011039215, ISSN: 1063-6692

## Beschreibung

Die vorliegende Erfindung geht von einer gemäß Oberbegriff des Hauptanspruches konzipierten elektrischen Installationsanordnung der Gebäudesystemtechnik aus.

Derartige elektrische Installationsanordnungen sind aus dem Stand der Technik allgemein bekannt, um diverse, typischerweise im Zusammenhang mit einem Gebäude vorhandene oder benötigte Funktionalitäten koordiniert und auf der Basis elektronischer Mittel durchführen zu können. Neben typischen Anwendungen einer Beleuchtungssteuerung zählen zu derartigen Hausautomationsfunktionalitäten insbesondere auch Betätigungen beziehungsweise Beeinflussungen von Beschattungseinrichtungen (typischerweise Jalousien), ferner Klima-, Heizungs-, Überwachungs- und andere Sicherheitstechnikvorrichtungen.

Durch die EP 1 273 121 B1 ist eine dem Oberbegriff des Hauptanspruches entsprechende elektrische Installationsanordnung bekannt geworden. Diese vorbekannte elektrische Installationsanordnung weist zumindest einen Sender und einen Empfänger auf, wobei zwischen dem Sender und dem Empfänger zur Sicherstellung eines einwandfreien Betriebs Informationen ausgetauscht werden. Hierbei wird vorgeschlagen, mehrere Kopien von Datenpaketen zu senden. Wenn der Empfänger das mehrfach übertragene Paket korrekt empfangen hat, sendet er ein "Stop-Repeat"-Signal an den Sender. Hierzu wird eine "decoding prediction metric" mit einem Schwellwert verglichen.

Zudem ist durch die DE 10 2006 062 190 B3 eine weitere elektrische Installationsanordnung der Gebäudesystemtechnik bekannt geworden. Diese vorbekannte elektrische Installationsanordnung ist zum Betrieb in einem Bussystem der Gebäudesystemtechnik vorgesehen und weist zumindest einen Sender und einen Empfänger auf, wobei zwischen dem Sender und dem Empfänger zur Sicherstellung eines einwandfreien Betriebs Informationen ausgetauscht werden. Bei derart ausgeführten elektrischen Installationsanordnungen ist jedoch nicht immer sichergestellt, dass die vom Sender abgegebenen Informationen so wie beabsichtigt beim Empfänger ankommen, so dass es zu Fehlfunktionen kommen kann.

Zudem ist es durch die DE 10 2009 010 966 B3 vorbekannt, dass ein elektrisches/elektronisches Installationsgerät aus einem Busgerät und einem separatem Anwendungsmodul besteht. Diese Anordnung ist für die Verwendung in der Gebäudesystemtechnik vorgsehen und mit zumindet einer Leiterplatte ausgerüstet, welche eine erste Schnittstelle zur Ankopplung an ein Bussystem eines Gebäudes und eine zweite Schnittstelle für das Anwendungsmodul aufweist. Die Leiterplatte ist mit einem, eine Empfangsstufe, eine Sendestufe und eine Stromversorgungseinheit aufweisenden Transceiver ausgerüstet. Der Transceiver kann Bestandteil eines ASICs sein.

Außerdem ist durch die DE 10 2007 012 085 A1 ein Verfahren zur Inbetriebnahme eines Funksystems bekannt geworden, bei welchem verschiedene Systeme vorgesehen werden können, um in Gebäuden Signale zwischen entsprechenden Teilnehmern, wie Sensoren und Aktoren übertragen bzw. um Schaltaktionen ausführen zu können. Bevorzugt werden dabei Systeme eingesetzt, die zur Signalübertragung einen sogenannten Bus nutzen. Dabei wird zwischen drahtgebundenen und drahtlosen Busmedien unterschieden, wobei unter anderem auch die Übertragung mittels Funksignalen üblich ist.

Des Weiteren ist es durch die DE 20 2004 018 794 U1 vorbekannt, einen Türgriff mit einem elektronischen Anzeigeelement auszurüsten, wobei eine Datenschnittstelle zur Anbindung des Anzeigeelementes an ein Informationsnetzwerk vorgesehen ist. Die Datenschnittstelle kann zum Datenverkehr mit einem Mobilfunknetz vorgesehen sein.

Der vorliegenden Erfindung liegt deshalb die Aufgabe zugrunde, eine elektrische Installationsanordnung zum Betrieb in einem Bussystem der Gebäudesystemtechnik zu schaffen, bei welcher sichergestellt ist, dass Funktionen nur dann ausgeführt werden, wenn die vom Sender abgegebenen Informationen vom Empfänger so verstanden worden sind, wie dies vom Sender vorgegeben wurde.

Diese Aufgabe wird durch die im Hauptanspruch angegebenen Merkmale gelöst. Bei einer solchermaßen ausgebildeten elektrischen Installationsanordnung ist besonders vorteilhaft, dass auf einfache Art und Weise die Vermeidung von Fehlfunktionen sichergestellt ist.

Weiterhin ist besonders vorteilhaft, dass sowohl die zur einwandfreien Funktion notwendige Informationen, als auch die den Status der Empfänger betreffende Informationen auf einfache Art und Weise ausgetauscht werden.

Weitere vorteilhafte Ausgestaltungen des erfindungsgemäßen Gegenstandes sind in den Unteransprüchen angegeben. Anhand eines Ausführungsbeispieles sei der erfindungsgemäße Gegenstand näher beschrieben, dabei zeigen:
- Fig. 1:: prinziphaft den Aufbau eines Senders als Blockschaltbild;
- Fig. 2:: prinziphaft den Aufbau eines Empfängers als Bockschaltbild;
- Fig. 3:: prinziphaft den Informationsfluss zwischen einem Sender und drei Empfängern.

Wie aus den Figuren hervorgeht, besteht eine solche elektrische Installationsanordnung, vorgesehen zum Betrieb in einem Bussystem der Gebäudesystemtechnik, zumindest aus einem Sender 1 und aus einem Empfänger 2, wobei zwischen dem Sender 1 und dem Empfänger 2 zur Sicherstellung eines einwandfreien Betriebs Informationen ausgetauscht werden. Der Sender 1 weist dabei zumindest eine Befehlssendeeinheit 3, zumindest eine Abfragesendeeinheit 4 und zumindest eine Statusempfangseinheit 5 auf und der Empfänger 2 weist dabei zumindest eine Befehlsempfangseinheit 6, zumindest eine Abfrageempfangseinheit 7, zumindest eine Statussendeeinheit 8 und zumindest eine Vergleichseinheit 9 auf. Beim vorliegenden Ausführungsbeispiel ist der Sender 1 dazu vorgesehen, mit drei Empfängern 2 zu kommunizieren. Die Informationen werden über ein Funkkommunikationssystem untereinander ausgetauscht.

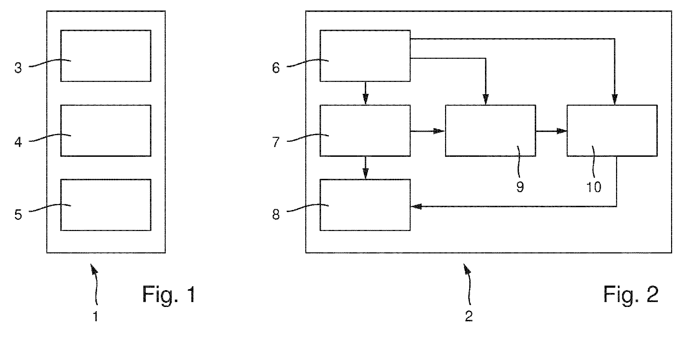

Wie insbesondere aus Figur 2 hervorgeht, steht die Befehlsempfangseinheit 6 der Empfänger 2 datentechnisch mit der Vergleichseinheit 9 und einer Applikationseinheit 10 in Verbindung. Des Weiteren steht die Applikationseinheit 10 mit der Statussendeeinheit 8 datentechnisch in Verbindung, welche ihrerseits datentechnisch mit der Abfrageempfangseinheit 7 in Verbindung steht. Das dient dem Zweck, dass die von der Befehlsempfangseinheit 6 empfangenen Befehle auf einfache Art und Weise an die Vergleichseinheit 9 und an die Applikationseinheit 10 weitergeleitet werden können. Die Abfrageempfangseinheit 7 empfängt die Anfragen des Senders 1 und sendet den in der übermittelten Information beinhaltenden Befehl an die Vergleichseinheit 9 weiter. Die Vergleichseinheit 9 prüft den Inhalt des Befehls und veranlasst bei Übereinstimmung von Befehl und Abfrage das Aussenden des Status an den Sender 1. Die Applikationseinheit 10 verarbeitet dann den Befehl.

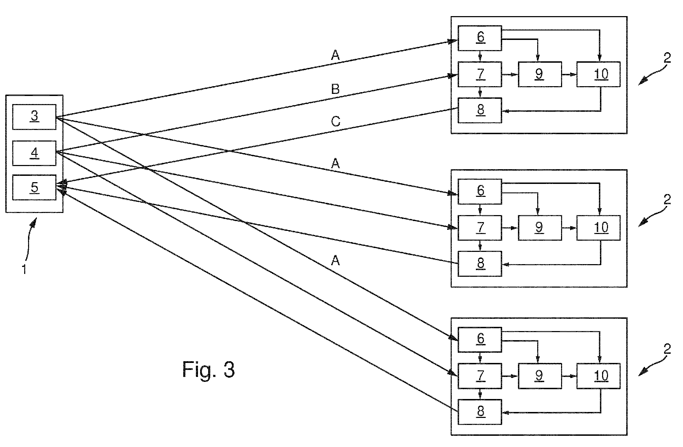

Wie insbesondere aus Figur 3 hervorgeht, ist ein Sender 1 vorgesehen, welchem drei Empfänger 2 zugeordnet sind. Selbstverständlich kann eine solche Installationsanordnung auch mehr als einen Sender 1 und mehr als drei Empfänger 2 aufweisen.

Zur Sicherstellung eines einwandfreien Betriebes schickt der Sender 1 als Erstes einen Befehl A (Informationen) an alle Empfänger 2. Dann wird vom Sender 1 an einen gezielt ausgesuchten Empfänger 2 eine Abfrage B gerichtet, um festzustellen, ob und welcher Befehl angekommen ist. Gegebenenfalls wird die Abfrage B wiederholt, falls innerhalb eines bestimmten Zeitraumes von diesem Empfänger 2 keine Antwort an den Sender 1 abgegeben wurde. Im Empfänger 2 wird der Befehl A mit dem in der Abfrage B beinhalteten Befehl verglichen. Falls der Befehl A mit dem in der Abfrage B beinhalteten Befehl nicht übereinstimmt, wird eine Reaktion seitens der Applikationseinheit 10 ausgelöst und der Sender 1 über den Status des Empfängers 2 informiert.

Stimmt der Befehl A mit dem in der Abfrage B beinhalteten Befehl überein, wird von diesem Empfänger 2 als Antwort der Status an den Sender 1 übermittelt.

Bei diesem Verfahren wird der Befehl A von der Befehlssendeeinheit 3 des Senders 1 abgesendet und von der Befehlsempfangseinheit 6 diese Empfängers 2 aufgenommen. Die Abfrage B wird von der Abfragesendeeinheit 4 des Senders 1 abgesandt und von der Abfrageempfangseinheit 7 des Empfängers 2 aufgenommen. Innerhalb dieses Empfängers 2 findet dann über die Vergleichseinheit 9 und die Applikationseinheit 10 eine Bearbeitung der Informationen (Befehl A, Abfrage B) statt. Falls der Befehl A mit dem in der Abfrage B vorhandenen Befehl übereinstimmt, wird von diesem Empfänger 2 über seine Statussendeeinheit 8, der Status an den Sender 1 zurückgemeldet, nämlich an dessen Statusempfangseinheit 5.

Der Sender 1 wird diesen Prozess für alle ihm zugeordnete Empfänger 2 durchführen.

Somit ist sichergestellt, dass die vom Sender 1 abgegebenen Informationen (Befehle) von den Empfängern 2 auch so verstanden worden sind, wie dies vom Sender 1 vorgegeben wurde. Zudem ist damit sichergestellt, dass Funktionen nur dann ausgeführt werden, wenn eine solche Überprüfung stattgefunden hat. Die weitestgehende Vermeidung von Fehlfunktionen ist somit vorteilhafter Weise gegeben.

## Patentansprüche

1. Elektrische Installationsanordnung, vorgesehen zum Betrieb in einem Bussystem der Gebäudesystemtechnik, mit zumindest einem Sender (1) und einem Empfänger (2), wobei zwischen dem Sender (1) und dem Empfänger (2) zur Sicherstellung eines einwandfreien Betriebs Informationen ausgetauscht werden, **dadurch gekennzeichnet, dass** der Sender (1) aufweist:
- zumindest eine Befehlssendeeinheit (3), die eingerichtet ist, um Befehle (A) eines Bussystems der Gebäudesystemtechnik an alle Empfänger (2) zu senden;
- zumindest eine Abfragesendeeinheit (4), die an einen gezielt ausgewählten Empfänger (2) eine Abfrage (B) richtet, um festzustellen, ob und welcher Befehl angekommen ist, wobei die Abfrage (B) einen Befehl beinhaltet; und
- zumindest eine Statusempfangseinheit (5);
und dass zumindest ein Empfänger (2) aufweist:
- zumindest eine Befehlsempfangseinheit (6), die Befehle vom Sender (1) empfängt;
- zumindest eine Abfrageempfangseinheit (7), die die Abfrage (B) vom Sender (1) empfängt;
- zumindest eine Statussendeeinheit (8), die einen Status des Empfängers (2) an die Statusempfangseinheit (5) des Senders (1) übermittelt; und
- zumindest eine Vergleichseinheit (9), die den Befehl (A) mit dem in der Abfrage (B) beinhalteten Befehl vergleicht.

2. Elektrische Installationsanordnung nach Anspruch 1, **dadurch gekennzeichnet, dass** zumindest ein Empfänger (2) mit einer Applikationseinheit (10) ausgerüstet ist.

3. Elektrische Installationsanordnung nach einem der Ansprüche 1 oder 2, **dadurch gekennzeichnet, dass** die Vergleichseinheit (9) zumindest eines Empfängers (2) in die Applikationseinheit (10) integriert ist.

4. Elektrische Installationsanordnung nach Anspruch 1, **dadurch gekennzeichnet, dass** die Informationen zumindest teilweise drahtgebunden über zumindest eine Leitung ausgetauscht werden.

5. Elektrische Installationsanordnung nach einem der Ansprüche 1 oder 2, **dadurch gekennzeichnet, dass** die Informationen zumindest teilweise drahtlos über ein Funkkommunikationssystem ausgetauscht werden.

6. Elektrische Installationsanordnung nach einem der Ansprüche 1 bis 3,
**dadurch gekennzeichnet, dass** die Informationen zumindest teilweise drahtlos über ein Infrarotkommunikationssystem ausgetauscht werden.

7. Elektrische Installationsanordnung nach einem der Ansprüche 1 bis 4,
**dadurch gekennzeichnet, dass** zumindest ein Teil der Funktionskomponenten des Senders (1) und/oder Empfängers (2) Bestandteil eines ASIC's sind.

8. Elektrische Installationsanordnung nach einem der Ansprüche 1 bis 5,
**dadurch gekennzeichnet, dass** der Sender (1) und/oder der Empfänger (2) zumindest einen Mikrocontroller aufweist.

9. Elektrische Installationsanordnung nach einem der Ansprüche 1 bis 6
**dadurch gekennzeichnet, dass** das Bussystem als KNX-Bussystem ausgeführt ist.

## Claims

1. Electric installation for operation in a bus system of building automation technology with at least one transmitter and one receiver, wherein between transmitter and receiver information are exchanged to safeguard faultless operation, **characterized by** the fact that the transmitter (1) provides at least one unit for transmission of commands (3), at least one unit for transmission of inquiries (4) and at least one unit for reception of the status (5), and that at least one receiver (2) provides at least one unit for reception of commands (6), at least one unit for reception of inquiries (7), at least one unit for transmission of the status (8) and at least one comparison unit (9).

2. Electric installation in accordance with Claim 1, **characterized by** the fact that at least one receiver (2) is equipped with an application unit (10).

3. Electric installation in accordance with any of Claims 1 or 2, **characterized by** the fact that the comparison unit (9) of at least one receiver (2) is integrated into the application unit (10).

4. Electric installation in accordance with Claim 1, **characterized by** the fact that the information, at least partly wired, are exchanged via at least one cable.

5. Electric installation in accordance with any of Claims 1 or 2, **characterized by** the fact that the information, at least partly wireless, are exchanged via a radio communication system.

6. Electric installation in accordance with any of Claims 1 to 3, **characterized by** the fact that the information, at least partly wireless, are exchanged via an infrared communication system.

7. Electric installation in accordance with any of Claims 1 to 4, **characterized by** the fact that at least one part of the functional components of the transmitter (1) and/or receiver (2) are part of an ASIC.

8. Electric installation in accordance with any of Claims 1 to 5, **characterized by** the fact that the transmitter (1) and/or receiver (2) provides at least one microcontroller.

9. Electric installation in accordance with any of Claims 1 to 6, **characterized by** the fact that the bus system is designed as KNX bus system.

## Revendications

1. Dispositif d'installation électrique, prévu pour l'exploitation d'un système de bus d'installations techniques systémiques des bâtiments et de la domotique, comportant au moins un émetteur et un récepteur, un échange d'informations ayant lieu entre l'émetteur et le récepteur pour assurer un parfait fonctionnement, **caractérisé en ce que** l'émetteur (1) présente au moins une unité d'émission de commandes (3), au moins une unité d'émission d'interrogations (4) et au moins une unité de réception d'état (5), et **en ce que** au moins un récepteur (2) présente au moins une unité de réception de commandes (6), au moins une unité de réception d'interrogations (7), au moins une unité d'émission d'état (8) et au moins une unité de comparaison (9).

2. Dispositif d'installation électrique selon la revendication 1, **caractérisé en ce que** au moins un récepteur (2) est équipé d'une unité d'application (10).

3. Dispositif d'installation électrique selon l'une des revendications 1 ou 2, **caractérisé en ce que** l'unité de comparaison (9) d'au moins un récepteur (2) est intégrée dans l'unité d'application (10).

4. Dispositif d'installation électrique selon la revendication 1, **caractérisé en ce que** les informations sont échangées au moins en partie par fil par l'intermédiaire d'au moins une ligne.

5. Dispositif d'installation électrique selon l'une des revendications 1 ou 2, **caractérisé en ce que** les informations sont échangées au moins en partie sans fil, par l'intermédiaire d'un système de communication radio.

6. Dispositif d'installation électrique selon l'une des revendications 1 à 3,
**caractérisé en ce que** les informations sont échangées au moins en partie sans fil, par l'intermédiaire d'un système de communication infrarouge.

7. Dispositif d'installation électrique selon l'une des revendications 1 à 4,
**caractérisé en ce que** au moins une partie des éléments fonctionnels de l'émetteur (1) et/ou du récepteur (2) font partie d'un ASIC.

8. Dispositif d'installation électrique selon l'une des revendications 1 à 5,
**caractérisé en ce que** l'émetteur (1) et/ou le récepteur (2) présente au moins un microcontrôleur.

9. Dispositif d'installation électrique selon l'une des revendications 1 à 6, **caractérisé en ce que** le système de bus est réalisé sous forme de système de bus KNX.
